# EUROPEAN PATENT APPLICATION

(11) **EP 4 012 642 A2**
(43) Date of publication of application: **15.06.2022**
(21) Application number: 22165619.2
(22) Date of filing: 30.03.2022
(51) Int. Cl.: G06Q 30/02, G06Q 20/22

(54) **BLOCKCHAIN-BASED OUTLET SITE SELECTION METHOD AND APPARATUS, DEVICE AND STORAGE MEDIUM**

(30) Priority: 29.06.2021 CN 202110729981
(71) Applicant: Beijing Baidu Netcom Science and Technology Co., Ltd., Beijing 100085 (CN)
(72) Inventor: JING, Bo, BEIJING, 100085 (CN)
(74) Representative: Chimini, Francesco

(57) **Abstract**

Provided are a blockchain-based outlet site selection method and apparatus, a device and a storage medium. The method includes: in response to an outlet site selection request of a task demander, determining a target data source and a target feature dimension associated with the target data source; acquiring, from the target data source, target feature data of candidate grids in a target region according to the target feature dimension and target region information in the outlet site selection request; selecting a target grid from the candidate grids according to the target feature data of the candidate grids; and controlling the task demander to pay a token to the target data source based on a smart contract according to usage attribute information of the target feature data. [Fig. 1]

## Description

### TECHNICAL FIELD

The present disclosure relates to the field of computer technology and, in particular, to the field of blockchain technology, for example, a blockchain-based outlet site selection method and apparatus, a device and a storage medium, and is applicable to cloud computing and cloud services.

### BACKGROUND

As forward positions of business, business outlets play an important role in market share. In terms of banking, for example, banking outlets are not only related to the reputation and profits of banks, but are also related to the vital interest of customers.

How to select a site suitable for opening an outlet, that is, how to select an outlet site is greatly important.

### SUMMARY

The present disclosure provides a blockchain-based outlet site selection method and apparatus, a device and a storage medium.

According to an aspect of the present disclosure, a blockchain-based outlet site selection method is provided. The method includes the steps below.

In response to an outlet site selection request of a task demander, a target data source and a target feature dimension associated with the target data source are determined.

Target feature data of candidate grids in a target region are acquired from the target data source according to the target feature dimension and target region information in the outlet site selection request.

A target grid is selected from the candidate grids according to the target feature data of the candidate grids.

The task demander is controlled to pay a token to the target data source based on a smart contract according to usage attribute information of the target feature data.

According to another aspect of the present disclosure, a blockchain-based outlet site selection apparatus is provided. The apparatus includes a target feature dimension module, a target feature data module, a grid selection module and a token payment module.

The target feature dimension module is configured to, in response to an outlet site selection request of a task demander, determine a target data source and a target feature dimension associated with the target data source.

The target feature data module is configured to acquire, from the target data source, target feature data of candidate grids in a target region according to the target feature dimension and target region information in the outlet site selection request.

The grid selection module is configured to select a target grid from the candidate grids according to the target feature data of the candidate grids.

The token payment module is configured to control the task demander to pay a token to the target data source based on a smart contract according to usage attribute information of the target feature data.

According to another aspect of the present disclosure, an electronic device is provided. The electronic device includes at least one processor and a memory communicatively connected to the at least one processor.

The memory stores instructions executable by the at least one processor. The instructions, when executed by the at least one processor, cause the at least one processor to execute the blockchain-based outlet site selection method according to any embodiment of the present disclosure.

According to another aspect of the present disclosure, a non-transitory computer-readable storage medium storing computer instructions is provided. The computer instructions are configured to cause a computer to execute the blockchain-based outlet site selection method according to any embodiment of the present disclosure.

According to another aspect of the present disclosure, a computer program product is provided. The computer program product includes a computer program. The computer program, when executed by a processor, causes the processor to perform the blockchain-based outlet site selection method according to any embodiment of the present disclosure.

According to the technologies of the present disclosure, the efficiency of outlet site selection and the security of feature data may be improved.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present disclosure.
FIG. 1 is a flowchart of a blockchain-based outlet site selection method according to an embodiment of the present disclosure.
FIG. 2 is a flowchart of another blockchain-based outlet site selection method according to an embodiment of the present disclosure.
FIG. 3 is a flowchart of another blockchain-based outlet site selection method according to an embodiment of the present disclosure.
FIG. 4 is a diagram illustrating a blockchain-based outlet site selection apparatus according to an embodiment of the present disclosure.
FIG. 5 is a block diagram of an electronic device for performing the blockchain-based outlet site selection method according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are merely illustrative. Therefore, it will be appreciated by those of ordinary skill in the art that various changes and modifications may be made to the embodiments described herein without departing from the scope and spirit of the present disclosure. Similarly, description of well-known functions and constructions is omitted hereinafter for clarity and conciseness.

The solution provided by the embodiments of the present disclosure is described in detail below in conjunction with the drawings.

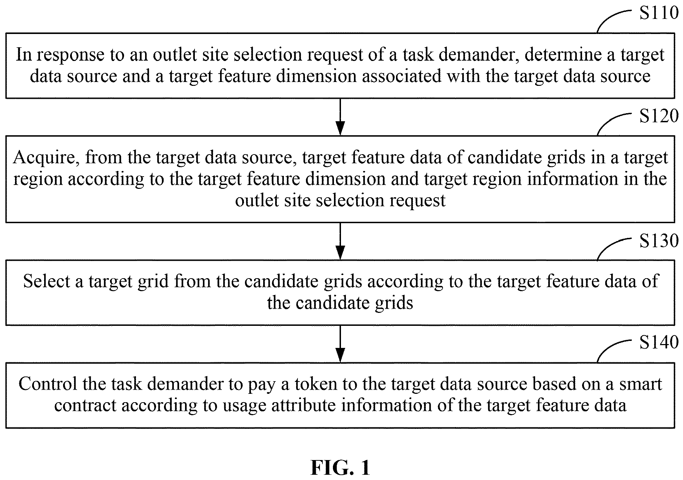

FIG. 1 is a flowchart of a blockchain-based outlet site selection method according to an embodiment of the present disclosure. The embodiment of the present disclosure is applicable to cases where outlet site selection is performed according to needs of a task demander. The method is executable by a blockchain-based outlet site selection apparatus. The apparatus may be implemented in a form of hardware and/or software, and may be configured in an electronic device. Referring to FIG. 1, the method includes the steps below.

In S 110, in response to an outlet site selection request of a task demander, a target data source and a target feature dimension associated with the target data source are determined.

In S120, target feature data of candidate grids in a target region are acquired from the target data source according to the target feature dimension and target region information in the outlet site selection request.

In S130, a target grid is selected from the candidate grids according to the target feature data of the candidate grids.

In S140, the task demander is controlled to pay a token to the target data source based on a smart contract according to usage attribute information of the target feature data.

The task demander refers to a business party having outlet site selection demands, such as banking business or communication operation business. The outlet site selection request may carry target region information. The target region refers to a region where the task demander needs to open a new outlet. The target region information may be identifications of the target region and the city type of the target region to which the target region belongs.

The candidate grids in the target region may be obtained by dividing the target region into grids according to grid restriction information. A target grid is selected from the candidate grids to serve as a site selection proposal for a new outlet. The grid restriction information may be acquired from the task demander, and grid restriction information includes grid shape information and grid size information. The grid shape information may include circular or rectangular, and the grid size information may include a fixed size or a size range, for example, 1 km × 1 km, 2 km × 2 km, or 1 km to 2 km.

The target data source is configured to provide a value of the target feature dimension. The target feature dimension refers to feature factors that affect the outlet site selection in the target region, that is, the feature factors that affect whether a candidate grid is selected as the target grid. The value of the target feature dimension (that is, the target feature data) may be obtained by statistics of user identify information, user behavior data, attribute information of an actual outlet and the like in the candidate grids. The target data source and the target feature dimension are not limited in the embodiment of the present disclosure. In terms of banking outlet site selection, for example, the target data source may be map applications, bank card management organizations, search engines, banking applications and the like. The target feature dimension associated with the map applications may include the number of subway stations, the number of bus stations, the number of schools, the number of parking spaces, traffic congestion indicator, income level ratio at all levels, age ratio at all levels, ratio of occupations, the number of permanent residents, the number of staff, whether there is a car and the like. The target feature dimension associated with the bank card management organizations may include actual outlet sites, banking types to which the actual outlets belong, the ratio of consumption level at all levels, the distribution of card holders in all banks. The target feature dimension associated with the search engines may include the ratio of financial interest preferences, where the financial interest preferences may be financial management, loan and stock. The target feature dimension associated with the banking applications may include the number of people who have installed their own applications, the number of customers whose salaries are issued by banks on behalf of them and the like.

The blockchain may record the target data source that the task demander needs to use, that is, the target feature dimension that the target data source can provide. For example, the blockchain may record the association relationship between the identity information of the task demander, the target feature dimension and the target data source. Specifically, according to the identity information of the task demander, the target feature dimension and the target data source may be acquired from the blockchain; according to the target region information and the grid restriction information, the candidate grids are obtained by dividing the target region into grids; according to the target feature dimension and the target region information, the target feature data of the candidate grids are acquired from the target data source; according to the target feature data of the candidate grids, the values of outlet site selection indicators of the candidate grids are determined, and according to the values, the target grid is selected from the candidate grids.

The outlet site selection indicator is configured to measure the possibility of opening an outlet in a candidate grid. For example, the outlet site selection indicator may be the number of total customers, the number of daily new customers of wealth management business, the number of daily new customers of credit card service, the number of daily new customers of debit card service, the total daily average deposit or the daily average new deposit. Specifically, according to the indicator values of the outlet site selection indicator, the candidate grids may be sorted, and according to the sorting result, the target grid is selected. It is to be noted that the outlet site selection indicators may be associated with different target feature data, that is, the outlet site selection indicators may be associated with different target feature dimensions and/or different target data sources.

The smart contract includes the usage charging rules of the target feature data by the task demander, for example, the single usage fee of the target feature data by the task demander. Specifically, the task demander and the target data source may agree on the target feature dimension associated with the target data source, the target feature data provided by the target data source and the single usage fee of the target feature data; and the agreed content is fixed as an electronic contract, and the electronic contract is converted to a smart contract and uploaded to the blockchain network for storage. When necessary, judicial effect may also be enhanced by connecting to the internet court.

The usage attribute information may include usage type, usage count, usage time and the like. Specifically, the task demander is controlled to pay the token to the target data source based on the smart contract according to the usage attribute information of the target feature data. A token may also be called a bookkeeping voucher. It is to be noted that the task demander pays the token to the target data source according to the actual usage of the target feature data, so the token limits paid to target data sources are different due to different usage attribute information. With the configuration in which the target feature data of the candidate grids provided by the target data source are used by the task demander to select the target grid to serve as the outlet site selection proposal, and the smart contract is called to control the task demander to pay the token to the target data source according to the usage attribute information of the target feature data provided by the task demander to the target data source, the outlet site selection may be automatized, the efficiency of outlet site selection may be improved, and the number of offline transactions between the task demander and the target data source may be reduced by using the token as the data usage voucher, thereby simplifying the interaction between the task demander and the target data source and improving the flexibility of outlet site selection. Moreover, with the configuration in which the token is paid to use the target feature data, the usage of the target feature data may be supervised, thereby avoiding the abuse and conversion of the target feature data and improving the security of the target feature data.

In the technical solution provided by the embodiment of the present disclosure, with the configuration in which the target grid is selected from the candidate grids to serve as the outlet site selection proposal of the task demander by using the target feature data provided by the target data source, the efficiency of outlet site selection may be improved. Moreover, with the configuration in which the task demander pays the token to the target data source as the data usage voucher, the flexibility of outlet site selection and the security of target feature data may be improved.

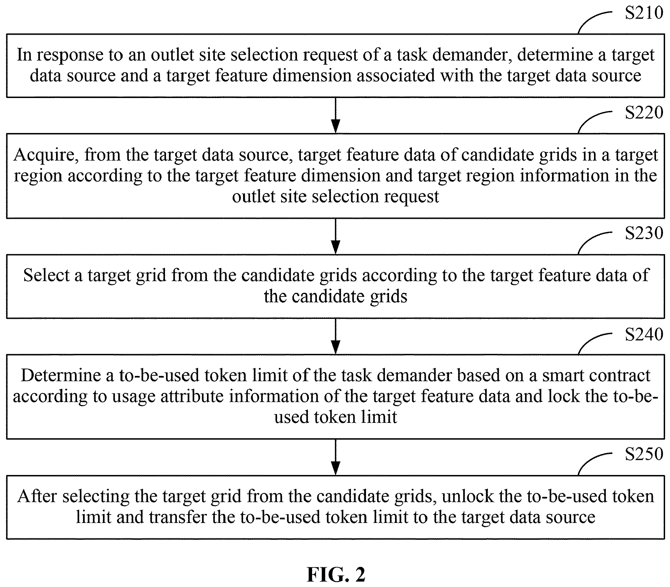

FIG. 2 is a flowchart of another blockchain-based outlet site selection method according to an embodiment of the present disclosure. The embodiment is an optional solution provided based on the preceding embodiment. Referring to FIG. 2, the blockchain-based outlet site selection method provided by the embodiment includes the steps below.

In S210, in response to an outlet site selection request of a task demander, a target data source and a target feature dimension associated with the target data source are determined.

In S220, target feature data of candidate grids in a target region are acquired from the target data source according to the target feature dimension and target region information in the outlet site selection request.

In S230, a target grid is selected from the candidate grids according to the target feature data of the candidate grids.

In S240, a to-be-used token limit of the task demander is determined and locked based on a smart contract according to usage attribute information of the target feature data.

In S250, after the target grid is selected from the candidate grids, the to-be-used token limit is unlocked and transferred to the target data source.

Specifically, the token limits to be paid to target data sources are determined respectively and summarized based on the charging rules agreed in the smart contract according to usage attribute information of multiple target feature data to obtain the to-be-used token limit of the task demander, and according to the to-be-used token limit, the token in the account of the task demander is locked.

Moreover, after the target grid is selected from the candidate grids, that is, after the task demander has successfully used the target feature data, the to-be-used token limit is unlocked, and according to the usage of the multiple target feature data, the to-be-used token limit is distributed to accounts of the target data sources. With the configuration in which the to-be-used token limit of the task demander is first locked, then unlocked after the task demander has successfully used the multiple target feature data, and distributed to the target data sources, a failure in token payment due to repeated usage of the token of the task demander may be avoided so that the rights of the target data source may be protected.

In an optional embodiment, after the to-be-used token limit is locked, the steps also include that in a case where any target source resource refuses to provide the target feature data, the to-be-used token limit is unlocked and returned to the task demander.

In the outlet site selection process, if any target data source refuses to provide the target feature data, the target grid cannot be selected from the candidate grids due to the incomplete target feature data, that is, the outlet site selection task is failed, and the outlet site selection is ended. In this case, with the configuration in which the to-be-used token limit is unlocked, and the to-be-used token is returned to the account of the task demander, loss to the task demander caused by a task failure may be avoided so that the rights of the task demander may be protected.

In an optional embodiment, before the task demander is controlled to pay the token to the target data source, the steps also include that a historical usage count of the target feature data is acquired from the blockchain and used as the usage attribute information of the target feature data according to the target data source, the target feature dimension and the target region information.

The blockchain also records the historical usage record of the target feature data. The historical usage record may include the target data source to which the target feature data belong, the target feature dimension associated with the target feature data, the target region information, the task demander and the like.

Specifically, according to the target data source, the target feature dimension and the target region information of the target feature data in this usage process, the historical usage record of the target feature data may be acquired from the blockchain, and according to the historical usage record, the historical usage count of the target feature data by the task demander is determined. According to the charging rules agreed in the smart contract, such as fixed-charging rule per time or stepped-charging rule per time, the token limit to be paid to the target data source by the task demander is determined. With the configuration in which the historical usage count of the target feature data is acquired from the blockchain, the to-be-paid token limit may be determined according to the historical usage count, that is, according to the historical usage count of the target feature data, data usage fee is paid to the target data source, thereby improving the flexibility of data usage charging.

In the technical solution according to the embodiment of the present disclosure, before the target feature data are used, the to-be-used token limit of the task demander is determined and locked; and after the target grid is selected, that is, after the target feature data are used, the to-be-used token limit is transferred to the target data source so that the rights of the target data source may be protected. Moreover, such charging rules as fixed-charging per time or stepped-charging per time are also supported so that the flexibility of data usage charging may be improved.

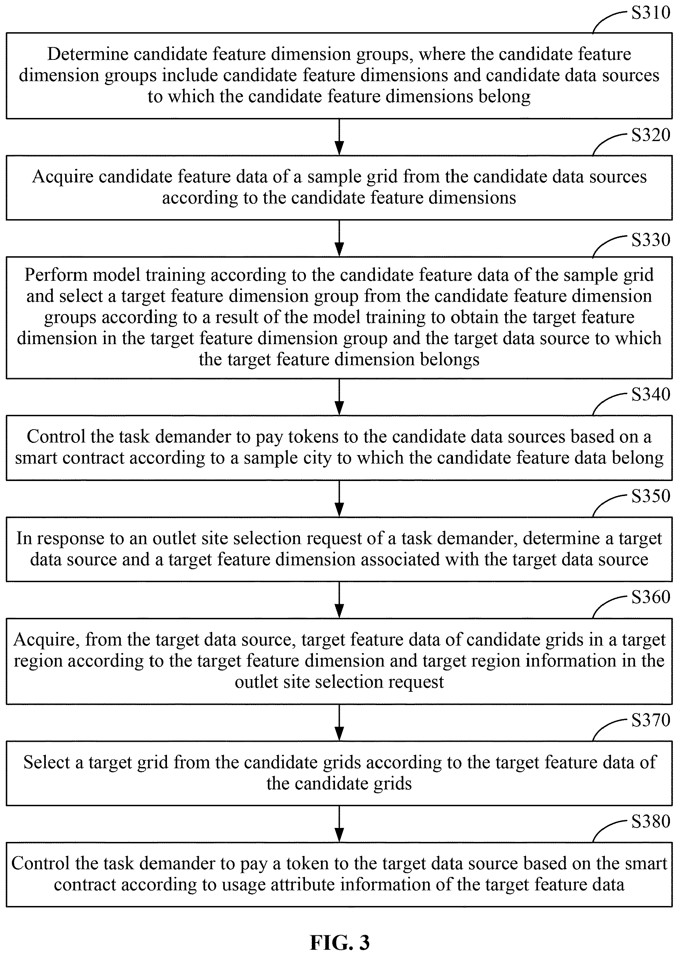

FIG. 3 is a flowchart of another blockchain-based outlet site selection method according to an embodiment of the present disclosure. The embodiment is an optional solution provided based on the preceding embodiment. Referring to FIG. 3, the blockchain-based outlet site selection method provided by the embodiment includes the steps below.

In S310, candidate feature dimension groups are determined, where the candidate feature dimension groups include candidate feature dimensions and candidate data sources to which the candidate feature dimensions belong.

Specifically, the candidate feature dimension groups may be obtained by combination of the candidate data sources and the candidate feature dimensions that the candidate data sources can provide.

In S320, candidate feature data of a sample grid are acquired from the candidate data sources according to the candidate feature dimensions.

A sample grid refers to a grid used in the target feature dimension selection stage, that is, a grid used in the model training stage. Specifically, with an actual outlet in the sample city as the center, according to the grid restriction information, the sample city may be divided into sample grids. It is to be noted that the grid restriction information used in the process of generating the candidate grids is the same as the grid restriction information used in the process of generating the sample grids.

Specifically, for each candidate feature dimension group, according to the candidate feature dimensions in each candidate feature dimension group and the candidate data sources to which the candidate feature dimensions belong, the candidate feature data of the sample grid are acquired from the candidate data sources. Moreover, according to attribute information of the actual outlet in the sample grid, tag values of outlet site selection indicators of the sample grid are determined.

In S330, model training is performed according to the candidate feature data of the sample grid, and a target feature dimension group is selected from the candidate feature dimension groups according to a result of the model training to obtain the target feature dimension in the target feature dimension group and the target data source to which the target feature dimension belongs.

Specifically, the candidate feature data of the sample grid may serve as the input of a to-be-trained model, the tag values of the outlet site selection indicators of the sample grid may serve as the output of the to-be-trained model, and the model training is performed to obtain a candidate outlet site selection model. It is to be noted that for the candidate feature dimension groups, model trainings may be performed respectively to obtain candidate outlet site selection models.

The candidate outlet site selection models may be detected, a target outlet site selection model is selected from the candidate outlet site selection models according to a detection result, and the candidate feature dimension group associated with the target outlet site selection model serves as the target feature dimension group to obtain the target feature dimension and the target data source to which the target feature dimension belongs. The target outlet site selection model, the target feature dimension and the target data source are used for subsequent outlet prediction. For example, the association relationship between the task demander, the target feature dimension and the target data source may be written into the blockchain and used for the subsequent outlet site selection by directly using the target feature data.

In S340, the task demander is controlled to pay tokens to the candidate data sources based on a smart contract according to a sample city to which the candidate feature data belong.

The smart contract may include the usage charging rules of the candidate feature data by the task demander in the model training stage. The usage charging rules in the model prediction stage are not limited in the embodiment of the present disclosure. Since the candidate feature data are frequently used in the model training stage, and trainings may be carried out for sample cities of different city types respectively in the model training stage, that is, the usage of the candidate feature data presents a characteristic of concentration in city types, charging may be packaged according to the sample city to which the candidate feature data belong. For example, charging amounts of sample cities of different city types are different.

Specifically, after the candidate outlet site selection model trainings are finished, the sample city to which the candidate feature data belong used in the candidate outlet site selection model training processes may be acquired, and the tokens are paid to the candidate data sources according to sample procedures.

In the model training stage, the configuration in which the task demander is controlled to pay the tokens to the candidate data sources according to the sample city to which the candidate feature data belong is suitable for the following characteristics of the candidate feature data used in the model training stage: the frequent and complex usage and the concentration in a city. In this manner, the data usage charging method in the model prediction stage may be simplified.

In S350, in response to an outlet site selection request of a task demander, a target data source and a target feature dimension associated with the target data source are determined.

In S360, target feature data of candidate grids in a target region are acquired from the target data source according to the target feature dimension and target region information in the outlet site selection request.

In S370, a target grid is selected from the candidate grids according to the target feature data of the candidate grids.

Specifically, the target feature data of the candidate grids may serve as the input of the target outlet site selection model, the outlet site selection probability of the candidate grids are obtained according to the output of the target outlet site selection model, and the target grid is selected according to the outlet site selection probability of the candidate grids.

In S380, the task demander is controlled to pay a token to the target data source based on the smart contract according to usage attribute information of the target feature data.

It is to be noted that before the candidate data sources provide the candidate feature data, and the target feature source provides the target feature data, data usage authority of the task demander may also be approved. Feature data are provided only when the approval is granted while the feature data are not provided when the approval is not granted. Moreover, the task approval information may be uploaded into the blockchain for record, such as data usage application reasons, required data content, approver, approval result, approval date, data provision date, data hash feature and the like.

In an optional embodiment, the steps also include that a contribution of a data source is determined according to a held token limit.

The contribution of the data source is positively associated with the held token limit. In the embodiment of the present disclosure, according to token limits held by the data sources, that is, the candidate data sources and the target data source, the contributions of the data sources may be determined respectively. Specifically, the data sources may obtain corresponding remunerations according to the token limits held by the data sources.

In the blockchain network, roles of participants may be changed to each other, and a participant as a data source may be changed to a task demander. For example, not only do the bank applications need to acquire the traveling data of the population feature from the map applications, but the map applications also need to acquire the asset data of the population feature from the bank applications. The contributions of participants to the blockchain network in the blockchain network-based distributed computing network are well measured by use of the token limits held by the data sources. Moreover, the usage of sensitive data may be subject to tamper-proof compliance auditing. The income is fairly distributed to the participants in the blockchain network by use of the token as the bookkeeping voucher to measure the contributions so that the efficiency and the reliability of income distribution can also be improved.

In the technical solution according to the embodiment of the present disclosure, in the model training stage and the outlet prediction stage, the task demander pays the tokens to the data sources according to the feature data provided by the data sources, and the contributions of different data sources in the blockchain network may be measured by use of the tokens.

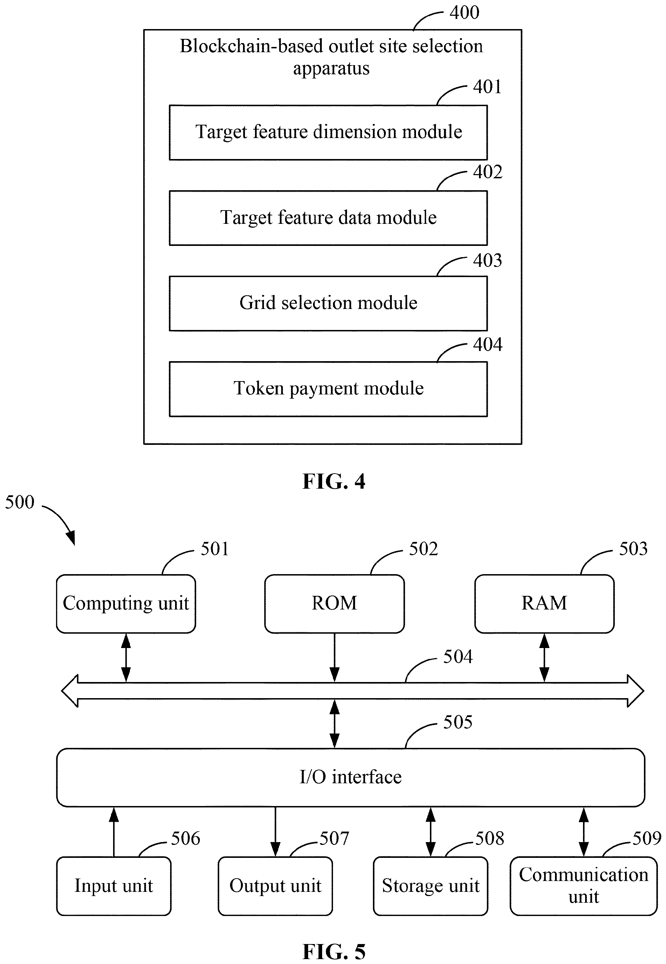

FIG. 4 is a diagram illustrating a blockchain-based outlet site selection apparatus according to an embodiment of the present disclosure. The embodiment is applicable to cases where outlet site selection is performed according to needs of the task demander. The apparatus is configured in an electronic device and can perform the blockchain-based outlet site selection method described in any embodiment of the present disclosure. Referring to FIG. 4, the blockchain-based outlet site selection apparatus 400 includes a target feature dimension module 401, a target feature data module 402, a grid selection module 403 and a token payment module 404.

The target feature dimension module 401 is configured to, in response to an outlet site selection request of a task demander, determine a target data source and a target feature dimension associated with the target data source.

The target feature data module 402 is configured to, from the target data source, acquire target feature data of candidate grids in a target region according to the target feature dimension and target region information in the outlet site selection request.

The grid selection module 403 is configured to select a target grid from the candidate grids according to the target feature data of the candidate grids.

The token payment module 404 is configured to control the task demander to pay a token to the target data source based on a smart contract according to usage attribute information of the target feature data.

In an optional embodiment, the token payment module 404 includes a token lock unit and a token transfer unit.

The token lock unit is configured to determine a to-be-used token limit of the task demander based on the smart contract according to the usage attribute information of the target feature data and lock the to-be-used token limit.

The token transfer unit is configured to, after the target grid is selected from the candidate grids, unlock the to-be-used token limit and transfer the to-be-used token limit to the target data source.

In an optional embodiment, the token payment module 404 further includes a token return unit.

The token return unit is configured to, in a case where any target data source refuses to provide the target feature data, unlock the to-be-used token limit and return the to-be-used token limit to the task demander.

In an optional embodiment, the blockchain-based outlet site selection apparatus 400 further includes a usage attribute determination module.

The usage attribute determination module is configured to acquire a historical usage count of the target feature data from a blockchain according to the target data source, the target feature dimension and the target region information and use the historical usage count as the usage attribute information of the target feature data.

In an optional embodiment, the blockchain-based outlet site selection apparatus 400 further includes a model training module. The model training module includes a candidate feature dimension unit, a candidate feature data unit, a model training unit and a token payment unit.

The candidate feature dimension unit is configured to determine candidate feature dimension groups, where the candidate feature dimension groups include candidate feature dimensions and candidate data sources to which the candidate feature dimensions belong.

The candidate feature data unit is configured to acquire candidate feature data of a sample grid from the candidate data sources according to the candidate feature dimensions.

The model training unit is configured to perform model training according to the candidate feature data of the sample grid and select a target feature dimension group from the candidate feature dimension groups according to a result of the model training to obtain the target feature dimension in the target feature dimension group and the target data source to which the target feature dimension belongs.

The token payment unit is configured to control the task demander to pay tokens to the candidate data sources based on the smart contract according to a sample city to which the candidate feature data belong.

In an optical embodiment, the blockchain-based outlet site selection apparatus 400 further includes a contribution module.

The contribution module is configured to determine a contribution of a data source according to a held token limit.

In the technical solution according to the embodiment of the present disclosure, the task demander can pay the tokens to the data sources according to the feature data provided by the data sources, and the contributions of different data sources in the blockchain network may be measured by use of the tokens.

In the technical solutions in the present disclosure, acquisition, storage and application of user personal information involved are in compliance with relevant laws and regulations and do not violate the public order and good customs.

According to the embodiments of the present disclosure, the present disclosure further provides an electronic device, a readable storage medium and a computer program product.

FIG. 5 is a block diagram of an exemplary electronic device 500 that may be configured to perform the embodiments of the present disclosure. Electronic devices are intended to represent various forms of digital computers, for example, laptop computers, desktop computers, worktables, personal digital assistants, servers, blade servers, mainframe computers and other applicable computers. Electronic devices may further represent various forms of mobile apparatuses, for example, personal digital assistants, cellphones, smartphones, wearable devices and other similar computing apparatuses. Herein the shown components, the connections and relationships between these components, and the functions of these components are illustrative only and are not intended to limit the implementation of the present disclosure as described and/or claimed herein.

As shown in FIG. 5, the device 500 includes a computing unit 501. The computing unit 501 may perform various types of appropriate operations and processing based on a computer program stored in a read-only memory (ROM) 502 or a computer program loaded from a storage unit 508 to a random-access memory (RAM) 503. Various programs and data required for operations of the device 500 may also be stored in the RAM 503. The computing unit 501, the ROM 502 and the RAM 503 are connected to each other by a bus 504. An input/output (I/O) interface 505 is also connected to the bus 504.

Multiple components in the device 500 are connected to the I/O interface 505. The multiple components include an input unit 506 such as a keyboard and a mouse, an output unit 507 such as various types of displays and speakers, the storage unit 508 such as a magnetic disk and an optical disk, and a communication unit 509 such as a network card, a modem or a wireless communication transceiver. The communication unit 509 allows the device 500 to exchange information/data with other devices over a computer network such as the Internet and/or various telecommunications networks.

The computing unit 501 may be various general-purpose and/or special-purpose processing components having processing and computing capabilities. Examples of the computing unit 501 include, but are not limited to, a central processing unit (CPU), a graphics processing unit (GPU), a special-purpose artificial intelligence (AI) computing chip, a computing unit executing machine learning model algorithms, a digital signal processor (DSP) and any appropriate processor, controller and microcontroller. The computing unit 501 executes various preceding methods and processing, such as the blockchain-based outlet site selection method. For example, in some embodiments, the blockchain-based outlet site selection method may be implemented as a computer software program tangibly contained in a machine-readable medium such as the storage unit 508. In some embodiments, part or all of the computer program may be loaded and/or installed on the device 500 via the ROM 502 and/or the communication unit 509. When the computer program is loaded to the RAM 503 and executed by the computing unit 501, one or more steps of the preceding blockchain-based outlet site selection method may be executed. Alternatively, in other embodiments, the computing unit 501 may be configured, in any other suitable manner (for example, by means of firmware), to execute the blockchain-based outlet site selection method.

Herein various embodiments of the systems and techniques described in the preceding may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software and/or combinations thereof. The various embodiments may include implementations in one or more computer programs. The one or more computer programs may be executable and/or interpretable on a programmable system including at least one programmable processor. The at least one programmable processor may be a special-purpose or general-purpose programmable processor for receiving data and instructions from a memory system, at least one input apparatus and at least one output apparatus and transmitting the data and instructions to the memory system, the at least one input apparatus and the at least one output apparatus.

Program codes for implementing the methods of the present disclosure may be compiled in any combination of one or more programming languages. The program codes may be provided for the processor or controller of a general-purpose computer, a special-purpose computer or another programmable data processing apparatus to enable functions/operations specified in flowcharts and/or block diagrams to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present disclosure, a machine-readable medium may be a tangible medium that may include or store a program that is used by or in conjunction with a system, apparatus or device that executes instructions. The machine-readable medium may be a machine-readable signal medium or a machine-readable storage medium. The machine-readable medium may include, but is not limited to, electronic, magnetic, optical, electromagnetic, infrared or semiconductor systems, devices or equipment or any suitable combinations thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device or any appropriate combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN), a blockchain outlet and the Internet.

The computing system may include clients and servers. The clients and servers are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

It is to be understood that various forms of the preceding flows may be used, with steps reordered, added or removed. For example, the steps described in the present disclosure may be executed in parallel, in sequence or in a different order as long as the desired result of the technical solutions disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present disclosure fall within the scope of the present disclosure.

## Claims

1. A blockchain-based outlet site selection method, **characterized by** comprising:
in response to an outlet site selection request of a task demander, determining (S110) a target data source and a target feature dimension associated with the target data source;
acquiring (S120), from the target data source, target feature data of candidate grids in a target region according to the target feature dimension and target region information in the outlet site selection request;
selecting (S130) a target grid from the candidate grids according to the target feature data of the candidate grids; and
controlling (S140) the task demander to pay a token to the target data source based on a smart contract according to usage attribute information of the target feature data.

2. The method according to claim 1, wherein the controlling the task demander to pay the token to the target data source based on the smart contract according to the usage attribute information of the target feature data comprises:
determining a to-be-used token limit of the task demander based on the smart contract according to the usage attribute information of the target feature data and locking the to-be-used token limit; and
after selecting the target grid from the candidate grids, unlocking the to-be-used token limit and transferring the to-be-used token limit to the target data source.

3. The method according to claim 2, wherein after the locking the to-be-used token limit, the method further comprises:
in a case where the target data source refuses to provide the target feature data, unlocking the to-be-used token limit and returning the to-be-used token limit to the task demander.

4. The method according to any one of claims 1 to 3, wherein before the controlling the task demander to pay the token to the target data source, the method further comprises:
acquiring a historical usage count of the target feature data from a blockchain according to the target data source, the target feature dimension and the target region information and using the historical usage count as the usage attribute information of the target feature data.

5. The method according to claim 1, wherein before responding to the outlet site selection request of the task demander, the method further comprises:
determining candidate feature dimension groups, wherein the candidate feature dimension groups comprise candidate feature dimensions and candidate data sources to which the candidate feature dimensions belong;
acquiring candidate feature data of a sample grid from the candidate data sources according to the candidate feature dimensions;
performing model training according to the candidate feature data of the sample grid and selecting a target feature dimension group from the candidate feature dimension groups according to a result of the model training to obtain the target feature dimension in the target feature dimension group and the target data source to which the target feature dimension belongs; and
controlling the task demander to pay tokens to the candidate data sources based on the smart contract according to a sample city to which the candidate feature data belong.

6. The method according to any one of claims 1 to 5, further comprising:
determining a contribution of a data source according to a held token limit.

7. A blockchain-based outlet site selection apparatus, **characterized by** comprising:
a target feature dimension module (401) configured to, in response to an outlet site selection request of a task demander, determine a target data source and a target feature dimension associated with the target data source;
a target feature data module (402) configured to, from the target data source, acquire target feature data of candidate grids in a target region according to the target feature dimension and target region information in the outlet site selection request;
a grid selection module (403) configured to select a target grid from the candidate grids according to the target feature data of the candidate grids; and
a token payment module (404) configured to control the task demander to pay a token to the target data source based on a smart contract according to usage attribute information of the target feature data.

8. The apparatus according to claim 7, wherein the token payment module comprises:
a token lock unit configured to determine a to-be-used token limit of the task demander based on the smart contract according to the usage attribute information of the target feature data and lock the to-be-used token limit; and
a token transfer unit configured to, after selecting the target grid from the candidate grids, unlock the to-be-used token limit and transfer the to-be-used token limit to the target data source.

9. The apparatus according to claim 8, wherein the token payment module further comprises:
a token return unit configured to, in a case where any target data source refuses to provide the target feature data, unlock the to-be-used token limit and return the to-be-used token limit to the task demander.

10. The apparatus according to any one of claims 7 to 9, further comprising:
a usage attribute determination module configured to acquire a historical usage count of the target feature data from a blockchain according to the target data source, the target feature dimension and the target region information and use the historical usage count as the usage attribute information of the target feature data.

11. The apparatus according to claim 7, further comprising a model training module, wherein the model training module comprises:
a candidate feature dimension unit configured to determine candidate feature dimension groups, wherein the candidate feature dimension groups comprise candidate feature dimensions and candidate data sources to which the candidate feature dimensions belong;
a candidate feature data unit configured to acquire candidate feature data of a sample grid from the candidate data sources according to the candidate feature dimensions;
a model training unit configured to perform model training according to the candidate feature data of the sample grid and select a target feature dimension group from the candidate feature dimension groups according to a result of the model training to obtain the target feature dimension in the target feature dimension group and the target data source to which the target feature dimension belongs; and
a token payment unit configured to control the task demander to pay tokens to the candidate data sources based on the smart contract according to a sample city to which the candidate feature data belong.

12. The apparatus according to any one of claims 6 to 11, further comprising:
a contribution module configured to determine a contribution of a data source according to a held token limit.

13. An electronic device, comprising:
at least one processor and
a memory communicatively connected to the at least one processor,
wherein the memory stores instructions executable by the at least one processor, wherein the instructions, when executed by the at least one processor, cause the at least one processor to execute the method according to any one of claims 1 to 6.

14. A non-transitory computer-readable storage medium storing computer instructions, wherein the computer instructions are configured to cause a computer to execute the method according to any one of claims 1 to 6.

15. A computer program product, comprising a computer program, wherein the computer program, when executed by a processor, causes the processor to perform the method according to any one of claims 1 to 6.
